# EUROPÄISCHE PATENTSCHRIFT

(11) **EP 2 539 785 B1**
(45) Veröffentlichungstag und Bekanntmachung des Hinweises auf die Patenterteilung: **30.03.2016**
(21) Anmeldenummer: 11700231.1
(22) Anmeldetag: 04.01.2011
(51) Int. Cl.: G05B 19/418

(54) **VERFAHREN ZUR REGELUNG EINES SPRITZGIESSPROZESSES**
METHOD FOR CONTROLLING AN INJECTION MOLDING PROCESS
PROCÉDÉ DE RÉGULATION D'UN PROCESSUS DE MOULAGE PAR INJECTION

(30) Priorität: 22.02.2010 DE 102010002174
(43) Veröffentlichungstag der Anmeldung: 02.01.2013
(73) Patentinhaber: Robert Bosch GmbH, 70442 Stuttgart (DE)
(72) Erfinder: MARIS-HAUG, Patricia, 74385 Pleidelsheim (DE); WIELAND, Robert, 71560 Sulzbach (DE); ACKERMANN, Jens, 70437 Stuttgart (DE); DENES, Istvan, 71336 Waiblinge/Hohenacker (DE); GEISE, Stephan, 59602 Ruethen (DE); NALOP, Holger, 71638 Ludwigsburg (DE); HAAG, Guenter, 70599 Stuttgart (DE); LEHTONEN, Paeivi, 70736 Fellbach (DE); ALTHAUS, Stephan, 73099 Adelberg (DE); LIEDL, Philipp, 70180 Stuttgart (DE)
(86) Internationale Anmeldenummer: PCT/EP2011/050052
(87) Internationale Veröffentlichungsnummer: WO 2011/101177

(56) Entgegenhaltungen:
- WO-A1-93/04839
- WO-A1-2006/124635
- DE-A1- 4 434 654
- DE-A1- 10 241 746
- DE-A1- 19 743 600
- DE-A1- 19 834 797
- US-A- 5 246 644

## Beschreibung

Die Erfindung betrifft ein Verfahren zur Regelung eines Spritzgießprozesses.

### Stand der Technik

Der Spritzgießprozess ist ein etabliertes Verfahren zum Urformen von Kunststoffbauteilen in der Industrie. Er wird häufig in größeren Produktionen eingesetzt. Bisher sind grundlegende qualitätsüberwachende Maßnahmen in den Spritzgießmaschinen integriert. Durch Veränderungen im Prozess und durch äußere Einflüsse auf diesen, können bei gleichen Maschinen- und Prozessparametern jedoch Bauteile mit unterschiedlicher Qualität produziert werden. Es werden bisher überwiegend nur Änderungen der Prozesssignale erkannt, wenn beispielsweise eine vorher definierte Hüllkurve bzw. Toleranzen für Prozesskenngrößen über- oder unterschritten werden. In diesem Fall werden die entsprechenden Bauteile über eine Qualitätsweiche aussortiert. Diese Funktionalität ist in den meisten aktuellen Spritzgießmaschinen integriert. Diese Prozessbewertung ist jedoch relativ ungenau, da nicht direkt die Qualitätsmerkmale des Bauteils bewertet werden, und ermöglicht keine Regelung des Prozesses. Eine Anpassung der Maschinenparameter erfordert das Eingreifen eines Bedieners und erfolgt in der Regel erst nachdem Ausschuss bereits produziert wurde. Die Anpassung der Spritzgießparameter erfolgt gemäß der Erfahrung des Bedieners, da die Qualitätsfaktoren des Bauteils abhängig vom Bauteil unterschiedlich auf einzelne Maschinenparameter wirken.

Die DE 101 204 76 A1 beschreibt ein Hybridmodell und Verfahren zur Bestimmung der Eigenschaften hinsichtlich der Herstellung eines Spritzgießformteils, welches aus ein oder mehreren neuronalen Netzen besteht und mit rigorosen Modellen, die untereinander verschaltet sind. Die rigorosen Modelle dienen zur Abbildung von Teilmodellen, die mittels mathematischer Formeln betreibbar sind. Das neuronale Teilmodell dient zur Abbildung von Prozessen, deren Zusammenhang nur in Form von Daten vorliegt und die nicht rigoros modelliert werden können. Durch die Kombination der Verfahren soll die Prognose von Prozesszeiten und Verarbeitungseigenschaften beim Spritzgießen von Kunststoff-Formteilen deutlich verbessert werden. Das beschriebene Verfahren liefert Prognosen auf Basis charakteristischer Merkmale des Prozesses und des zu verarbeitenden Material zu thermischen und rheologischen Verarbeitungseigenschaften und zur Zykluszeit. In der DE 101 204 76 A1 erfolgt jedoch keine Regelung des Prozesses im Hinblick auf Qualitätsmerkmale der gefertigten Spritzgießformteile.

In DE 102 417 46 A1 wird ein Verfahren zur Qualitätsbewertung und Prozessüberwachung bei zyklischen Produktionsprozessen beschrieben, wobei zwischen einer Einstellphase I, einer Einstellphase II und einer Arbeitsphase unterschieden wird und eine Qualitätsbewertung der im zyklischen Produktionsprozess gefertigten Produkte anhand eines Satzes von Qualitätsmerkmalen erfolgt, wobei in der ersten Einstellphase eine automatische Arbeitspunktoptimierung, Generierung eines ersten Trainingsdatensatzes, automatische Kenngrößenselektion und ein selbstgenerierendes Prozessmodell eingehen, das in die Arbeitsphase übernommen wird. Diese beinhaltet neben dem Prozessmodell ein Qualitätsbewertungsmodul und ein Prozessüberwachungsmodul und sieht bei unzulässigen Abweichungen in einer Einstellphase II eine Stichprobenentnahme vor, die zur Generierung eines weiteren Trainingsdatensatzes führt, mit anschließender erneuter Kenngrößenselektion und Anpassung des selbstgenerierenden Prozessmodells, welches daran anschließend in die Arbeitsphase übernommen wird. Die Qualitätsbewertung und Prozessüberwachung erfolgt hierbei in separaten, zusätzlich zu dem eigentlichen Spritzgießprozess notwendigen Phasen bzw. Zyklen, wodurch der gesamte Verfahrensablauf sehr viel Zeit benötigt und sehr aufwändig ist.

Aus dem Dokument DE 44 34 654 A1 ist ein Verfahren zur Beeinflussung von zyklisch ablaufenden Prozessen bekannt, welches beispielsweise in Verbindung mit Kunststoff-Spritzgießmaschinen Verwendung finden kann. Bei einem derartigen Verfahren kann die mittelbare Beziehung zwischen Maschineneinstellgrößen und charakteristischen Eigenschaften der gefertigten Produkte über die Prozesskennzahlen ermittelt werden und dann ein optimaler Arbeitspunkt für den Betrieb der Maschine ermittelt werden, woraufhin eine selbsttätige Rückführung der Maschineneinstellgrößen erfolgen kann.

Aus Dokument DE 197 43 600 A1 ist ein Verfahren zur Überwachung eines Produktionsprozesses bekannt, bei dem Signalverläufe an mehreren Stellen des Produktionsprozesses aufgenommen werden und mindestens eine Qualitätsaussage zu den erzeugten Produkten abgeleitet wird. Insbesondere betrifft dieses Dokument ein Verfahren zur Überwachung eines zyklischen Produktionsprozesses, bei dem eine Erfassung von Signalverläufen mehrerer Zustandsgrössen des Prozesses durch Sensoren, eine Prüfung dieser Signale auf Zulässigkeit und, anhand aus den Signalverläufen erzeugter Prozesskennzahlen, eine Prognose der Qualität der erzeugten Produkte stattfindet, die bei unerlaubter Ausprägung über eine Nachregelung der Einstellgrössen des Prozesses wieder in den erlaubten Bereich zurückgeführt wird.

Das Dokument WO 93/04839 A1 beschreibt ein Verfahren zur Steuerung einer Maschine für die Herstellung von Produkten, insbesondere zur Steuerung einer Spritzgießmaschine für die Herstellung von Kunststoff-Spritzgussteilen, wobei in einem Lernzyklus Kenndatenfelder ermittelt und gespeichert werden, die die Abhängigkeit ausgewählter Qualitätsparameter der hergestellten Produkte von ausgewählten Einstellparametern der Maschine angeben.

Das Dokument US 5,246,644 A beschreibt ein Verfahren zum quantitativen Charakterisieren der Qualität und des Verhaltens eines Spritzgussprozesses und des damit hergestellten Produkts.

Das Dokument DE 198 34 797 A1 beschreibt ein Verfahren zum qualitätsgesteuerten Herstellen von Kunststoffen, bei welchem an aussagekräftigen Stellen im Werkzeug und gegebenenfalls auch in der Plastifiziereinheit beim Spritzgießen zustandsspezifische Materialkennwerte mit Sensoren kontinuierlich erfasst und mit Hilfe eines Expertensystems von einem Computer bewertet werden.

### Offenbarung der Erfindung

Es ist daher die Aufgabe der Erfindung, ein Verfahren zur Regelung eines Spritzgießprozesses zur Verfügung zu stellen, mittels welchem eine zeitnahe Qualitätsüberwachung möglich ist und gleichzeitig die Anzahl der als Ausschuss geltenden Spritzgießbauteile möglichst weit reduziert werden kann.

Die Lösung der Aufgabe erfolgt erfindungsgemäß durch die Merkmale des Anspruchs 1. Vorteilhafte Ausgestaltungen der Erfindung sind in den Unteransprüchen angegeben.

Das erfindungsgemäße Verfahren zur Regelung eines Spritzgießprozesses erfolgt, indem über ein Reglermodul Prozesseinstellgrößen einer Spritzgießmaschine gesteuert werden, wobei das Reglermodul Daten aus einer prozessinternen Sensorik der Spritzgießmaschine, Daten über den Fertigungsverlauf der Spritzgussbauteile aus einer externen Sensorik und/oder Daten über die Qualität eines gefertigten Spritzgießbauteils aus einer Online-Bauteilkontrolle empfängt, diese Daten in einem Qualitätsprognosemodul auswertet und in Abhängigkeit der Auswertung der Daten eine Änderung der Prozesseinstellgrößen der Spritzgießmaschine durchführt, wobei durch die Änderung der Prozesseinstellgrößen der Arbeitspunkt der Spritzgießmaschine derart verändert wird, dass die Qualitätsmerkmale der mit dem geänderten Arbeitspunkt gefertigten Spritzgießbauteile innerhalb der vorgegebenen Toleranzen der Qualität der Spritzgießbauteile liegen, wobei die Prozesseinstellgrößen der Spritzgießmaschine in einer hierarchischen Abfolge geändert werden, so dass die von der Reaktionszeit der Spritzgussmaschine eher zeitkritischen Prozesseinstellgrößen wenn möglich nicht oder nur sehr langsam geändert werden.

Mittels des erfindungsgemäßen Verfahrens ist es möglich, aus den über das Prognosemodell in Realzeit gewonnenen Veränderungen in den Qualitätsmerkmalen den Arbeitspunkt der Spritzgießmaschine anhand berechneter Veränderungen in den Prozesseinstellgrößen bzw. in den Maschineneinstellparametern so zu verändern, dass die Qualitätsmerkmale der mit dem geänderten Arbeitspunkt gefertigten Bauteile innerhalb der vorgegebenen Toleranzen liegen. Ein Arbeitspunkt setzt sich aus mehreren Einstellparametern bzw. Maschineneinstellparametern der Spritzgießmaschine zusammen, wobei der Ist-Arbeitspunkt der Spritzgießmaschine den tatsächlichen Ist-Einstellparametern der Spritzgießmaschine entspricht. Durch die Veränderung der Prozesseinstellgrößen, das heißt der Einstellparameter der Spritzgießmaschine, kann der Arbeitspunkt der Spritzgießmaschine während des Spritzgießprozesses kontinuierlich verändert werden, so dass zu jeder Zeit eine optimale Qualität der gefertigten Spritzgießbauteile erreicht werden kann. Dabei ist es möglich, den Arbeitspunkt in Abhängigkeit der kleinsten Abweichungen der Einstellparameter zu verändern und optimal einzustellen, damit diese Ungleichmäßigkeiten möglichst unmittelbar ausgeglichen werden können. Dabei werden die Einstellparameter bzw. die Prozesseinstellgrößen der Spritzgießmaschine in einer hierarchischen Abfolge geändert, so dass die von der Reaktionszeit der Spritzgussmaschine eher zeitkritischen Einstellparameter bzw. Prozesseinstellgrößen wie zum Beispiel die Temperaturen wenn möglich nicht oder nur sehr langsam geändert werden, damit die Anzahl der als Ausschuss ermittelten Bauteile zwischen zwei aufeinanderfolgenden Arbeitspunkteinstellungen möglichst gering ist. Dadurch ist es möglich, die Produktivität der Spritzgießmaschine zu erhöhen und gleichzeitig die Energie und Recyclingkosten zu verringern. Treten während des Fertigungsprozesses unerwartete externe Einflüsse auf, die den Prozess stören und die bislang nicht nachgeregelt werden konnten, werden diese erfindungsgemäß anhand der prognostizierten Qualitätsmerkmale erkannt und es wird ein entsprechendes Ausgangssignal ausgegeben. Dies kann beispielsweise durch eine Überwachung der über mehrere Fertigungszyklen gemittelten Ausschussrate erfolgen und/oder mittels der überwachungsspezifischen Sensorwerte. Die Prozessregelung kann sich dabei automatisch an die Komplexität der zugrundeliegenden physikalischen Prozesse anpassen. Das Verfahren ist dabei derart gestaltet, dass vom Anwender keine spezifischen Kenntnisse statistisch-mathematischer Verfahren, insbesondere neuronaler Netzwerke gefordert werden. Zudem kann die Qualitätsbewertung der relevanten Prozesskenngrößen für jedes einzelne Qualitätsmerkmal automatisiert gebildet werden. Die ebenfalls automatisiert selektierten Prozesskenngrößen und die für jedes Qualitätsmerkmal ermittelten Abhängigkeiten tragen zur Erhöhung des Prozessverständnisses bei. Langsame Prozessdriften, etwa in Folge einer zunehmenden Raumtemperatur oder infolge von Chargenänderungen, können erkannt und detektiert und innerhalb vorgebbarer Grenzwerte durch die Regelung kompensiert werden, so dass möglichst keine Ausschussbauteile produziert werden. Der Einsatz der Prozessregelung mittels des erfindungsgemäßen Reglermoduls ermöglicht zusätzlich eine genaue Online-Vorhersage von Bauteilmaßen und beliebigen anderen Merkmalen, wie beispielsweise auch Gratbildung, Formfüllung, Brandstellen usw. für jedes hergestellte Bauteil. Mit Hilfe der Maßprognosen kann eine Aussage über den laufenden Prozess getroffen werden. Damit ist eine direkte Qualitätsbeurteilung möglich. Der Prozess wird mit Hilfe der Prognosen geregelt, indem der Anlage ein neuer Arbeitspunkt übertragen wird. Dieser wird mit Hilfe eines zweiten neuronalen Netzes berechnet, das die Maschineneinstellparameter bzw. Prozesseinstellgrößen wie beispielsweise Nachdruckhöhe, Einspritzgeschwindigkeiten usw. mit den Messwerten bzw. den Qualitätsmerkmalen der Bauteile verknüpft. Auf diese Weise kann eine zyklusübergreifende Regelung ermöglicht werden.

Gemäß einer vorteilhaften Ausgestaltung der Erfindung werden innerhalb des Reglermoduls aus den Daten der externen Sensorik und aus den Daten der prozessinternen Sensorik Prozesskenngrößen ermittelt, wobei aus den Prozesskenngrößen und den Daten der Online-Bauteilkontrolle eine Qualitätsprognose für mindestens ein Qualitätsmerkmal eines Spritzgießbauteils durchgeführt wird. Vorzugsweise ist es möglich, dass für jedes einzelne Qualitätsmerkmal eines Spritzgießbauteils eine Qualitätsprognose durchgeführt werden kann. Die Prozesskenngrößen werden dabei zu einem Qualitätsprognosemodul innerhalb des Reglermoduls übertragen, welches aus prozessbedingten Veränderungen der Prozesskenngrößen online eine Qualitätsprognose für mindestens ein vorzugsweise für jedes Qualitätsmerkmal des Spritzgießbauteils durchführt. Dadurch können Bauteile, deren prognostizierte Qualitätsmerkmale außerhalb der jeweiligen Toleranzbereiche liegen, unmittelbar ausgemustert werden. Dadurch ist eine sichere und kontinuierliche Qualitätskontrolle der gefertigten Spritzgießbauteile bereits während des Fertigungsprozesses möglich.

Nach einer weiter vorteilhaften Ausgestaltung der Erfindung detektiert das Reglermodul während des Spritzgießprozesses auftretende Sensorfehler und korrigiert diese Online. Dabei werden insbesondere die Sensorfehler der externen Sensorik und der prozessinternen Sensorik detektiert. Dadurch können während des Fertigungsprozesses auftretende Sensorfehler, beispielsweise falls ein Drucksensor im Laufe der Fertigungszeit einen Druck-Offset aufweist, erkannt und gegebenenfalls unmittelbar während des Fertigungsprozesses korrigiert werden. Wird ein Sensorfehler detektiert, der sich nicht korrigieren lässt, erfolgt die Ausgabe einer entsprechenden Meldung. Dadurch, dass Sensorfehler detektiert werden können, können Fehlbeurteilungen der Qualitätsmerkmale verhindert werden, welche ansonsten sämtliche aus einem Signal abgeleiteten Prozesskenngrößen fehlerhaft machen könnten. Dadurch ist eine besonders sichere Prozessüberwachung und Regelung des Spritzgießprozesses möglich. Insbesondere eine besonders sichere Qualitätskontrolle der gefertigten Bauteile ist dadurch möglich. Das Online-Korrigieren erfolgt vorzugsweise, indem durch eine Online-Nachjustierung der externen Sensorik und der prozessinternen Sensorik die Sensorwerte korrigiert werden können, so dass weiterhin und ohne Prozessunterbrechung eine zuverlässige Online-Prognose der Qualitätsmerkmale erfolgen kann. Online bedeutet hierbei, dass die Prognose der Qualitätsmerkmale automatisch und zeitnah, während des laufenden Fertigungsprozesses erfolgt, ohne dass der Benutzer dies steuern muss oder die Spritzgießmaschine zusätzliche Einstellzyklen bzw. Qualitätsprognosezyklen fahren müsste..

Um die bei der Qualitätsprognose als Ausschuss detektierten Spritzgießbauteile unmittelbar aus dem Fertigungsprozess ausschleusen zu können, ist es bevorzugt vorgesehen, dass über das Qualitätsprognosemodul unmittelbar eine Ausschussweiche angesteuert wird.

Weiter ist es bevorzugt vorgesehen, dass innerhalb des Reglermoduls mittels der aus den Daten der externen Sensorik und aus den Daten der prozessinternen Sensorik ermittelten Prozesskenngrößen die Prozessstabilität ermittelt wird und, falls die Prozessstabilität vorgegebene Grenzwerte überschreitet, eine Meldung ausgegeben wird. Die Bewertung der Prozessstabilität erfolgt dabei vorzugsweise mittels der Prozesskenngrößen und deren zeitlicher Verlauf als Eingangsgrößen. Nur dann, wenn der Fertigungsprozess als hinreichend stabil bewertet wird, kann unter reproduzierbaren Fertigungsbedingungen gefertigt werden und zuverlässig das Erfordernis einer Veränderung des Arbeitspunktes erkannt werden.

Weiter bevorzugt ist es vorgesehen, dass das Reglermodul ein Prozesseinstellungsmodul umfasst, innerhalb welchem ein bestehender Arbeitspunkt des Spritzgießprozesses auf Basis der Qualitätsprognose, einer Prozessdrifterkennung und der Prozessstabilität ermittelt und bewertet wird und gegebenenfalls ein neuer geänderter Arbeitspunkt festgelegt wird. Dadurch ist es möglich, den Fertigungsprozess bzw. den Spritzgießprozess unmittelbar auf Veränderungen der ermittelten Qualitätsprognose der Prozessdrifterkennung oder bei einer Veränderung der Prozessstabilität entsprechend zu verändern, indem ein neuer Arbeitspunkt festgelegt wird, so dass die Qualität der gefertigten Spritzgießbauteile weiter aufrechterhalten werden kann und es zu keinen Qualitätseinbußen kommt. Dadurch kann optimal auf jegliche Störfaktoren während des Fertigungsprozesses eingegangen werden, so dass unmittelbar auf den Fertigungsprozess eingewirkt werden kann, um zu verhindern, dass es zu Qualitätseinbußen bei den gefertigten Spritzgießbauteilen kommen kann.

Dabei erfolgt vorzugsweise eine schrittweise Anpassung des bestehenden Arbeitspunktes an den neuen geänderten Arbeitspunkt. Durch die rechtzeitig schrittweise Anpassung des bestehenden Arbeitspunktes an den neuen Arbeitspunkt ist es möglich zu verhindern, dass als Ausschuss zu deklarierende Spritzgießbauteile gefertigt werden, so dass sämtliche Qualitätsmerkmale der weiterhin gefertigten Bauteile innerhalb der Toleranzvorgaben für die Qualität der Bauteile liegen.

Die vorstehend genannten Vorteile des Verfahrens zur Regelung eines Spritzgießprozesses gelten entsprechend auch für ein Reglermodul mit Mitteln zur Durchführung dieses Verfahrens.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

Es zeigen:
- Fig. 1: ein Blockschema eines erfindungsgemäßen Gesamtsystems;
- Fig. 2: ein Blockschema eines Reglermoduls;
- Fig. 3: ein Blockschema eines Sensorüberwachungsmoduls;
- Fig. 4: ein Blockschema eines Prozessstabilitätsmoduls;
- Fig. 5: ein Blockschema eines Qualitätsprognosemoduls;
- Fig. 6: ein Blockschema eines Prozesseinstellungsmoduls;
- Fig. 7: ein Blockschema eines Reglerkriteriummoduls;
- Fig. 8: ein Blockschema eines Arbeitspunktmoduls;
- Fig. 9: ein Blockschema eines Einrichtungsphasemoduls;
- Fig. 10: ein Blockschema eines automatisierten DoE-Durchführungsmoduls.

### Beschreibung der Abbildung

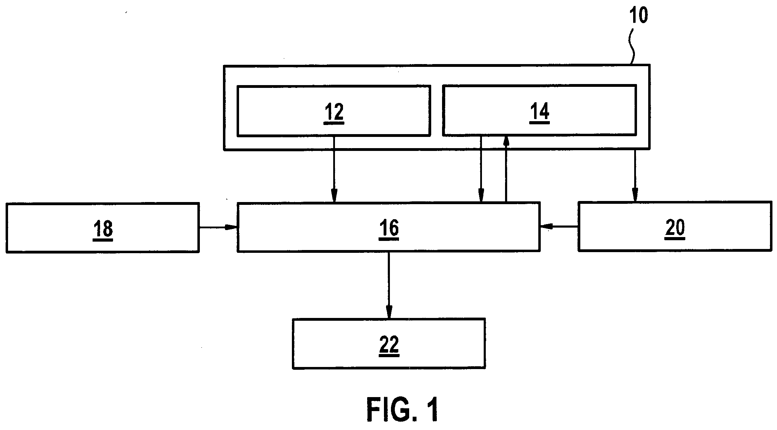

Fig. 1 zeigt ein Blockschema eines Gesamtsystems des erfindungsgemäßen Verfahrens. Dabei ist mit 10 eine Spritzgießmaschine bezeichnet, die mit einer prozessinternen Sensorik 12 ausgestattet ist. Über Prozesseinstellgrößen 14 lässt sich der Arbeitspunkt der Spritzgießmaschine 10 verändern. Die Spritzgießmaschine 10 ist mit einem Reglermodul 16 verbunden, so dass Informationen und Daten zwischen Spritzgießmaschine 10 und Reglermodul 16 übertragen werden können. Zusätzlich ist eine externe Sensorik 18 vorhanden, die Signale aus dem Fertigungsverlauf bzw. Spritzgießverlaufes an das Reglermodul 16 zur Bewertung übergibt. Erfindungsgemäß ist eine Online-Bauteilkontrolle 20 vorgesehen, so dass zusätzliche Informationen über die Qualität jedes gefertigten Spritzgießbauteils in das Reglermodul 16 zur Bewertung übergeben werden kann. Das Reglermodul 16 ändert bei Bedarf die Prozesseinstellgrößen 14 der Spritzgießmaschine. Über das Reglermodul 16 erfolgt auch die Ansteuerung einer Ausschussweiche 22.

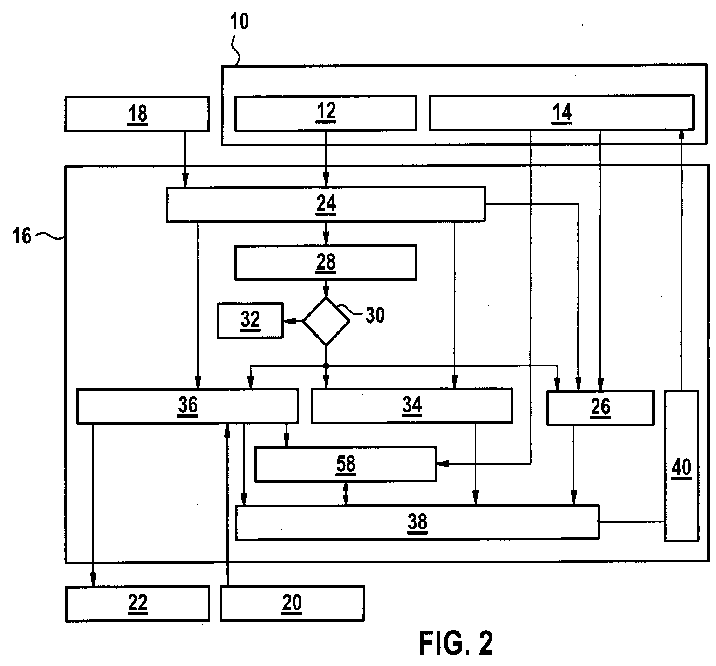

Fig. 2 zeigt ein Blockschema eines erfindungsgemäßen Reglermoduls 16. Über die prozessinterne Sensorik 12 der Spritzgießmaschine 10 werden Sensordaten der Spritzgießmaschine 10 und/oder der mit der Spritzgießmaschine 10 verbundenen Werkzeuge, wie zum Beispiel der Werkzeuginnendruck und/oder Temperaturwerte, an ein Prozesskenngrößenmodul 24 übertragen. Innerhalb des Prozesskenngrößenmoduls 24 werden aus den empfangenen Sensordaten der externen Sensorik 18 und der prozessinternen Sensorik 12, die als diskrete Werte vorliegen können oder als ein kontinuierlicher Datenstrom, mittels unterschiedlicher statistischer Verfahren ein Satz von Prozesskenngrößen gebildet, die untereinander möglichst wenig korreliert sind. Beispiel für Prozesskenngrößen sind etwa ein Maximalwert eines Signals, die Steigung eines Signals zu einem bestimmten Zeitpunkt, ein einzelner Signalwert oder unterschiedliche Zeitfenster, wie etwa die Nachdruckzeit. Die so gebildeten Prozesskenngrößen werden in einem Prozessdrifterkennungsmodul 26 bezüglich langsamer Prozessdriften überwacht und in einem Sensorüberwachungsmodul 28 zur Analyse möglicher Sensorfehler verwendet. Durch das Sensorüberwachungsmodul 28 kann erfindungsgemäß sichergestellt werden, dass während des Spritzgießprozesses auftretende Sensorfehler, beispielsweise falls ein Drucksensor im Laufe der Fertigungszeit einen Druck-Offset aufweist, dieser Sensorfehler erkannt wird und falls möglich durch eine Online-Nachjustierung der Sensorwerte korrigiert wird, so dass weiterhin und ohne Prozessunterbrechung eine zuverlässige Online-Prognose der Qualitätsmerkmale erfolgen kann. Wird ein Sensorfehler detektiert, der sich nicht Online korrigieren lässt, erfolgt über ein Entscheidungskriterium 30 die Ausgabe einer entsprechenden Meldung 32, falls das Bauteil als Ausschuss ermittelt worden ist. Wird in dem Entscheidungskriterium 30 kein Sensorfehler entdeckt, so werden die Werte unter anderem weiter an ein Prozessstabilitätsmodul 34 weitergeleitet. Durch das Sensorüberwachungsmodul 28 wird damit sichergestellt, dass nur signifikante Sensorwerte zur weiteren Auswertung verwendet werden. Im Prozessstabilitätsmodul 34 kann die langfristige Entwicklung des Spritzgießprozesses bewertet werden. Hierzu erfolgt eine Bewertung der Entwicklung der Prozesskenngrößen als auch der Sensordaten. Falls sich der Prozess nicht innerhalb vorgegebener Toleranzwerte entwickelt, erfolgt die Ausgabe einer entsprechenden Meldung. Die Prozesskenngrößen des Prozesskenngrößenmoduls 24 werden zum Qualitätsprognosemodul 36 übertragen, welches aus prozessbedingten Veränderungen der Prozesskenngrößen Online eine Qualitätsprognose für mindestens ein, vorzugsweise für jedes Qualitätsmerkmal eines Spritzgießbauteils durchführt. Durch das Qualitätsprognosemodul 36 wird die Ausschussweiche 22 angesteuert. Spritzgießbauteile, deren prognostizierte Qualitätsmerkmale außerhalb der jeweiligen Toleranzbereiche liegen, werden somit ausgeschleust. Erfindungsgemäß ist eine Online-Bauteilkontrolle 20 eines oder mehrerer Qualitätsmerkmale des zu fertigenden Bauteils möglich. Die Daten der auf diese Weise gemessenen Qualitätsmerkmale werden in diesem Fall ebenfalls zu dem Qualitätsprognosemodul 36 übertragen. Die Ergebnisse des Qualitätsprognosemoduls 36 stellen wesentliche Eingabewerte dar für das Prozesseinstellungsmodul 38, welches bei entsprechender Erfordernis einen neuen Arbeitspunkt 40 ermittelt mit den zugehörigen Prozesseinstellgrößen 14 der Spritzgussmaschine 10.

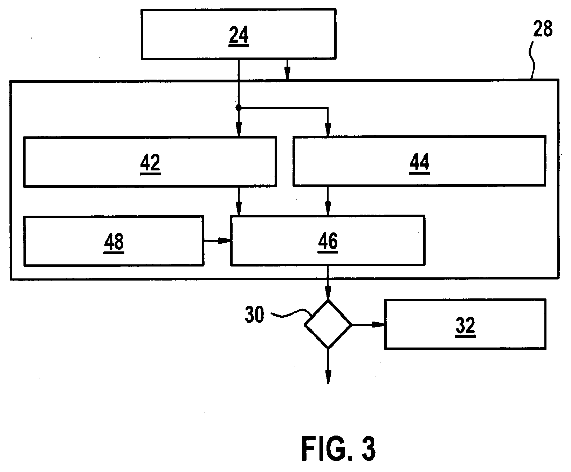

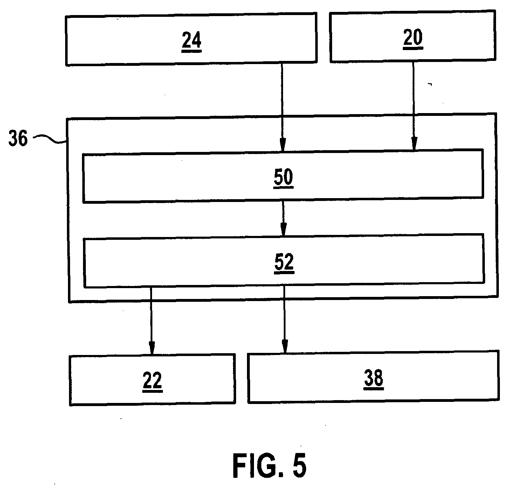

Fig. 3 zeigt ein Blockschema des Sensorüberwachungsmoduls 28. In das Sensorüberwachungsmodul 28 gehen die Prozesskenngrößen 24 als Eingabeinformationen ein, welche aus den Informationen der prozessinternen Sensorik 12 und der externen Sensorik 18 gewonnen werden. Dabei zeigen sich Veränderungen etwa eines bestimmten Sensorwertes anhand eines oder mehrerer Prozesskennzahlen, die aus den zugehörigen Sensorsignalen gewonnen werden. Die Überwachung der internen Sensorik 12 und der externen Sensorik 18 erfolgt zum einen über eine Überprüfung der Prozesskenngrößengrenzwerte 42, das heißt der Maximal- und Minimalwerte der Prozesskenngrößen, und zum anderen durch einen Vergleich der Prozesskenngrößenwerte mit den jeweiligen Prozesskenngrößenreferenzwerten 44, die aus den zeitlichen Verläufen der Prozesskenngrößen des Prozesskenngrößenmoduls 24 aus vorhergehenden Spritzgusszyklen gewonnen werden im Bewertungsmodul 46. In die Bewertung gehen erfindungsgemäß zusätzlich die Ergebnisse einer Sensitivitätsanalyse 48 ein. Durch die Sensitivitätsanalyse 48 wird berücksichtigt, dass in ein Prognosemodell der Qualitätsmerkmale 50 des Qualitätsprognosemoduls 36 einzelne Prozesskenngrößen mit sehr unterschiedlicher Gewichtung eingehen können. Daher wirken sich auch Schwankungen einzelner Prozesskenngrößen unterschiedlich stark auf die Prognose der Qualitätsmerkmale 52, welche in Fig. 5 gezeigt sind, aus. Im umgekehrten Fall kann damit die Signifikanz der einzelnen Prozesskenngrößen abgeschätzt werden. Ergibt sich daraus, dass ein oder mehrere Prozesskenngrößen bzw. deren Entwicklung auf eine fehlerhafte Sensorik hinweisen, erfolgt durch das Entscheidungsmodul 30 die Ausgabe einer entsprechenden Meldung 32.

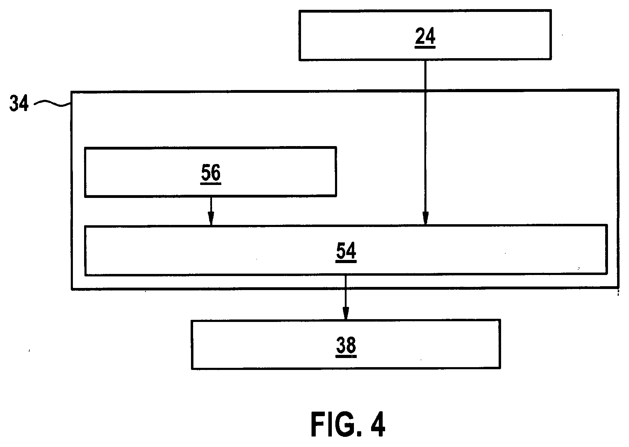

Fig. 4 zeigt ein Blockschema eines Prozessstabilitätsmoduls 34. Wird die Sensorik als in Ordnung durch das Sensorüberwachungsmodul 28 bewertet, so erfolgt im Prozessstabilitätsmodul 34 die Überwachung der Prozessstabilität. Hierzu erfolgt eine Bewertung der Prozessstabilität 54 mittels der Prozesskenngrößen 24 und deren zeitlicher Verlauf 56 als Eingangsgrößen. Nur dann, wenn der Spritzgießprozess als hinreichend stabil bewertet wird, kann unter reproduzierbaren Spritzgießbedingungen gefertigt werden oder zuverlässig das Erfordernis eines neuen Arbeitspunktes im Prozesseinstellungsmodul 38 sicher erkannt werden.

In Fig. 5 ist ein Blockschema des Qualitätsprognosemoduls 36 dargestellt. Eingangsgrößen in das Qualitätsmerkmale Prognosemodul 50 sind die Prozesskenngrößen 24 sowie, falls vorhanden, Messdaten der Online-Bauteilkontrolle 20. Auf Basis des Prognosemoduls 50 erfolgt für alle während des Spritzgießprozesses gefertigten Spritzgießbauteile eine Prognose der Qualitätsmerkmale 52. Für den Fall, dass nicht sämtliche prognostizierten Qualitätsmerkmale eines gefertigten Spritzgießbauteils als in Ordnung bewertet werden, wird die Ausschussweiche 22 angesteuert und das entsprechende fehlerhafte Spritzgießbauteil ausgemustert. Die Daten der prognostizierten Qualitätsmerkmale 52 gehen zur weiteren Prozessbewertung in das zentrale Prozesseinstellungsmodul 38 ein.

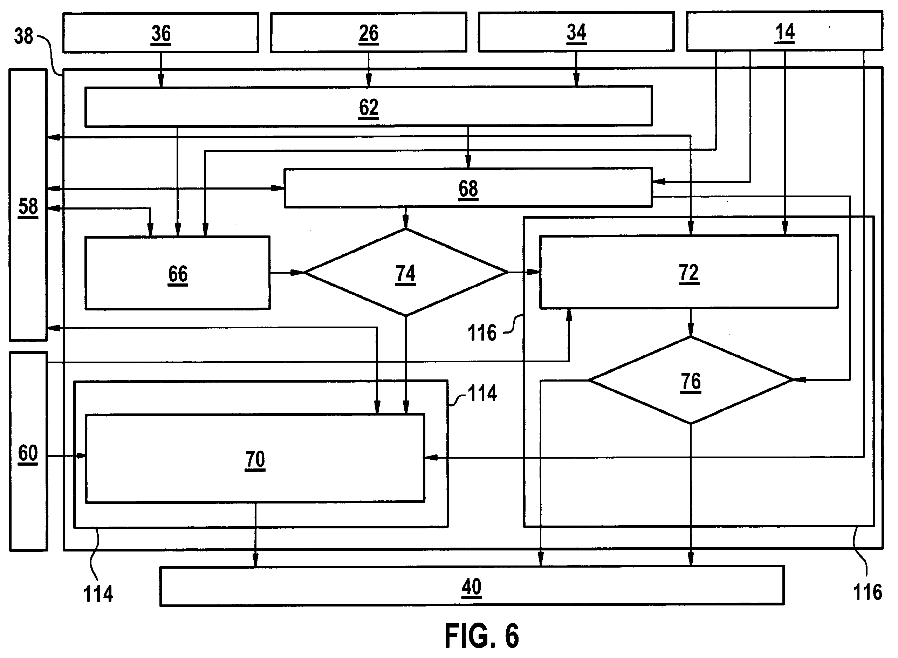

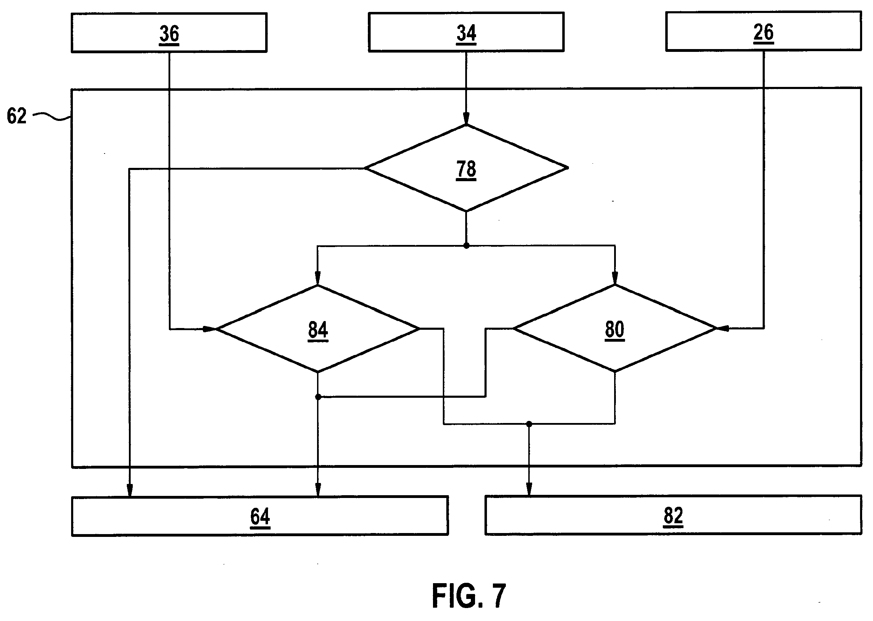

Fig. 6 zeigt ein Blockschema des Prozesseinstellungsmoduls 38. Im Prozesseinstellungsmodul 38 wird der Arbeitspunkt des Spritzgießprozesses auf Basis des Qualitätsprognosemoduls 36 die Prozessdrifterkennung 26 und die Prozessstabilität 34 ermittelt, bewertet und gegebenenfalls ein neuer Arbeitspunkt 40 festgelegt. Zusätzlich gehen in das Prozesseinstellungsmodul 38 die Prozesseinstellgrößen 14 ein sowie die Ergebnisse aus einem Arbeitspunktmodul 58 und der Eingabe der hierarchischen Nachführregeln 60. Im Modul Reglerkriterium 62 wird festgelegt, ob keine Änderung des Arbeitspunktes 64, siehe Fig. 7, erforderlich ist, oder ob ein neuer Arbeitspunkt 40 ermittelt werden soll. Ist ein neuer Arbeitspunkt 40 aufgrund der Entwicklung des Spritzgießprozesses erforderlich, so ist es ein erfindungsgemäßes Ziel, die Änderungen der Prozesseinstellgrößen 14 in Richtung auf den bestmöglichen, das heißt globalen Arbeitspunkt schrittweise so vorzunehmen, dass zu allen Zeitschritten von Anbeginn bis zum Erreichen des neuen globalen Arbeitspunktes möglichst keine Bauteile gefertigt werden, die nicht in Ordnung sind, das heißt deren Qualitätsmerkmale außerhalb der vorgegebenen Toleranzwerte liegen. Hierdurch wird eine deutliche Erhöhung der Energieeffizienz des Spritzgießprozesses erreicht und gleichzeitig die Materialeffizienz durch eine Vermeidung von Ausschussteilen optimal gesteigert. Um diese erfindungsgemäße Ziel zu erreichen, müssen je nach Fertigungsprozess einzelne Prozesseinstellgrößen 14, beispielsweise die Prozesseinstellgröße PS1 langsam von einem Wert PS1ₐₗₜ in Richtung auf den Wert PS1ₙₑᵤ nachgeführt werden. Dies bedeutet, dass während der Übergangszeit von einem globalen Arbeitspunkt GOAₐₗₜ, zu einem neuen globalen Arbeitspunkt GOAₙₑᵤ, der Spritzgießprozess mit einem sich ständig verändernden Arbeitspunkt erfolgt, jedoch so, dass sämtliche Qualitätsmerkmale der weiterhin gefertigten Bauteile innerhalb der Toleranzvorgaben liegen. Erfindungsgemäß wird dies dadurch erreicht, dass mittels des Arbeitspunktmoduls 58 die Bestimmung eines globalen Arbeitspunktes 66, eines lokalen Arbeitspunktes ohne hierarchische Nachführregel 68 LOA1, eines lokalen Arbeitspunkts, mit hierarchischer Nachführregel 70 LOA3, sowie eines lokalen Arbeitspunkts, mit statischer hierarchischer Nachführregel 72 LOA2 erfolgt und die einzelnen Arbeitspunkte entsprechend den Zielvorgaben "Null Fehlerfertigung" bewertet und verwendet werden. Die Zeitskalen, mit denen der Spritzgießprozess auf Änderungen einzelner Prozesseinstellgrößen reagiert, können sehr unterschiedlich sein. So kann beispielsweise beim Spritzgießen eine Druckänderung sehr rasch, das heißt fast ohne Zeitverzögerung von einem Bauteil zum nächsten Bauteil erfolgen, während Temperaturänderungen beim Spritzgießprozess nur sehr langsam vorgenommen werden können und eine Nachführregel erfordern. Damit ergibt sich eine Hierarchie in den Zeitskalen der Prozesseinstellgrößen. Die Eingabe der hierarchischen Nachführregel erfolgt über das Modul 60. Die Nachführregel 60 bestimmt zusammen mit dem Arbeitspunktmodul 58 dynamisch den schrittweise nachzuführenden lokalen Arbeitspunkt LOA3, welcher durch in einem Modul 114 mit globaler Reglerstrategie mit hierarchischer Prozessnachführung bestimmt wird. Die neuen Arbeitspunkte, das heißt die neuen einzustellenden Werte der Prozesseinstellgrößen im Übergangsbereich vom globalen Arbeitspunkt GOAₐₗₜ zum neuen globalen Arbeitspunkt GOAₙₑᵤ des Spritzgießprozesses, werden aufgrund eines vergleichenden Entscheidungskriterium 74 "GOA signifikant besser als LOA1?" und eines vergleichenden Entscheidungskriteriums 76 "LOA2 signifikant schlechter als LOA1?" ermittelt und an die Spritzgießmaschine weitergegeben. Dabei wird im Entscheidungskriterium 74 bewertet, ob der globale Arbeitspunkt GOA signifikant besser ist als der lokale Arbeitspunkt ohne hierarchische Nachführregel LOA1. Falls dies mit ja beantwortet wird, so erfolgt die Bestimmung des lokalen Arbeitspunktes mit dynamischer hierarchischer Nachführregel LOA3 70 über die globale Reglerstrategie 114. Falls dies mit nein beantwortet wird, so erfolgt die Bestimmung des lokalen Arbeitspunktes mit statischer hierarchischer Nachführregel LOA2 72 über die lokale Reglerstrategie 116. Im Entscheidungskriterium 76 wird bewertet, ob der lokale Arbeitspunkt mit statischer hierarchischer Nachführregel LOA2 signifikant schlechter ist als der lokale Arbeitspunkt ohne hierarchische Nachführregel LOA1, das heißt, ob eine globale Reglerstrategie mit hierarchischer Prozessnachführung oder eine lokale Reglerstrategie jeweils zum Einsatz kommen, wobei bei beiden Möglichkeiten ein neuer Arbeitspunkt 40 bestimmt wird.

In Fig. 7 ist ein Blockschema eines Reglerkriteriummoduls 62 gezeigt. Keine Änderung des Arbeitspunktes 64 erfolgt, solange der Spritzgießprozess nicht stabil ist, was im Entscheidungskriterium 78 bestimmt wird. Dies wird im Entscheidungskriterium 78 mittels der Daten des Prozessstabilitätsmoduls 34 ermittelt. Kann von einem stabilen Spritzgießprozess ausgegangen werden, wird im Entscheidungskriterium 80 ermittelt, ob eine Prozessdrift erkannt wurde. Falls ja, wird ein Signal zur Ermittlung der neuen Arbeitspunkte 82 GOA, LOA1, LOA2, LOA3 ausgegeben. Falls nein, wird der Arbeitspunkt nicht geändert 64. Ebenso wird ein neuer Arbeitspunkt im Feld 82 gefordert, falls über einen vorgegebenen Fertigungszeitraum die Qualitätsmerkmale der gefertigten Bauteile außerhalb der Toleranzvorgaben liegen, was im Entscheidungskriterium 84 ermittelt wird.

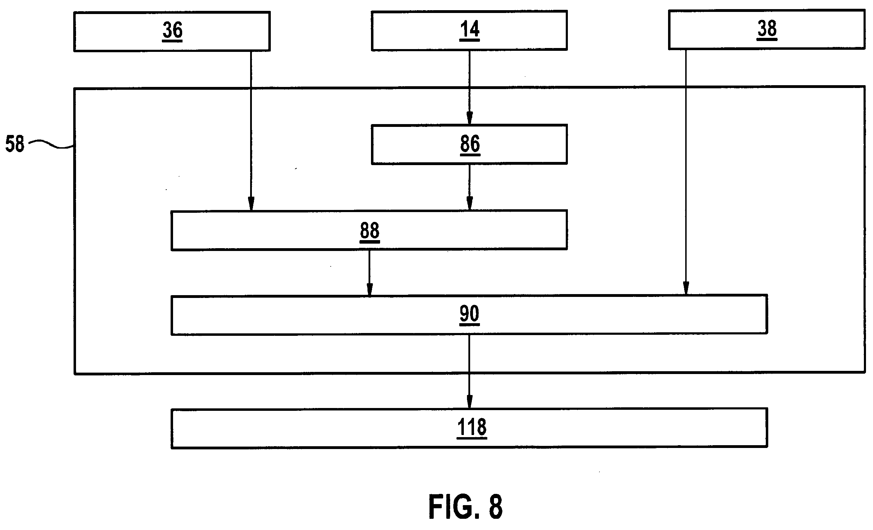

Fig. 8 zeigt ein Blockschema des Arbeitspunktmoduls 58. Innerhalb des Arbeitspunktmoduls 58 werden die lokalen Arbeitspunkte LOA1, LOA2, LOA3 und der globale Arbeitspunkt GOA ermittelt 118. Als Eingabedaten dienen die Prozesseinstellgrößen 14, Informationen zur Prozesseinstellung aus dem Prozesseinstellungsmodul 38 und Daten der Qualitätsprognose aus dem Qualitätsprognosemodul 36. In einem Prozessmodellemodul 86 wird ein Zusammenhang zwischen den Prozesseinstellgrößen und den Qualitätsmerkmalen erzeugt. Einerseits ergibt sich über das Qualitätsprognosemodul 36 ein Zusammenhang zwischen den Qualitätsmerkmalen und den über die Sensorik Online gewonnenen Prozesskenngrößen sowie Kenngrößen aus der Online-Bauteilkontrolle 20, andererseits besteht ein Zusammenhang zwischen den Prozesseinstellgrößen 14 und den Qualitätsmerkmalen. Solange die Prozesseinstellung unverändert bleibt, erwartet man ohne weitere störende Einflüsse und Prozessveränderungen, dass auch die Qualitätsmerkmale der gefertigten Bauteile unverändert bleiben. Externe Störungen, Prozessveränderungen infolge interner Prozesse während der Fertigung wirken sich jedoch auf die Werte einzelner Prozesskenngrößen aus und/oder Werte, die in der Online-Bauteilkontrolle 20 erfasst werden und können damit über das Qualitätsprognosemodul 36 bewertet werden. Unterschiede in den Qualitätsprognosen der Qualitätsmerkmale über das Qualitätsprognosemodul 36 werden erfasst, bewertet und führen erfindungsgemäß zu einer Korrektur der Prozessmodelle des Prozessmodellenmoduls 86 im Modul korrigierte Prozessmodelle 88. Die korrigierten Prozessmodelle bilden den Ausgangspunkt für die Ermittlung der Arbeitspunkte im Modul Ermittlung optimaler Arbeitspunkte 90. Ausgabewert des Arbeitspunktmoduls 58 sind damit die lokalen Arbeitspunkte LOA1, LOA2, LOA3 sowie der globale Arbeitspunkt GOA.

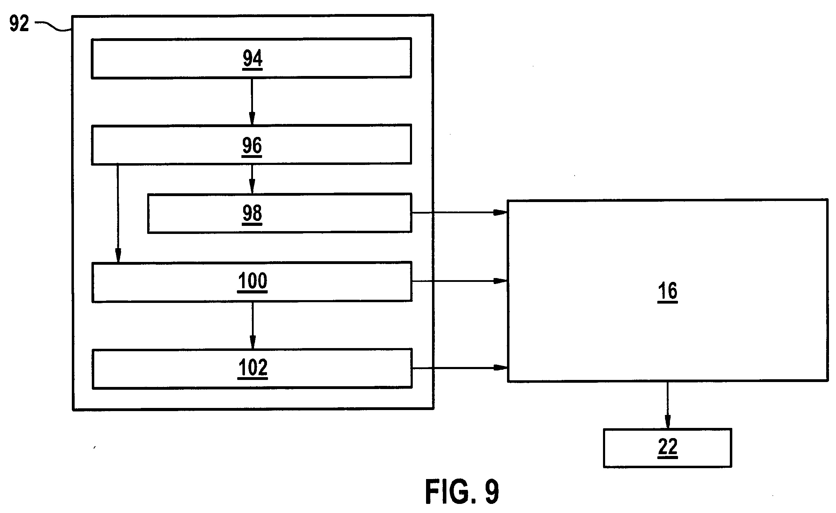

Fig. 9 zeigt ein Blockschema eines Einrichtungsphasenmoduls 92. In Abhängigkeit von der Anzahl und dem Wertebereich der Prozesseinstellgrößen wird ein Versuchsplan 94 gemäß den bekannten Prinzipien des Design of Experiment DoE erstellt. Erfindungsgemäß ist ein Modul 96 zur automatisierten DoE-Durchführung 96 vorgesehen. Die Ergebnisse dieser automatisierten DoE-Durchführung 96 werden einem Modul 98 zur Erzeugung der Prozessmodelle übergeben. Die erzeugten Prozessmodelle 98 werden dem Reglermodul 16 übergeben. Ebenso werden die Ergebnisse der automatisierten DOE-Durchführung 96 zu einem Modul Bestimmung Prozesskenngrößen 100 übergeben. Diese gewonnenen Prozesskenngrößen 100 werden ebenfalls im Reglermodul 16 weiterverarbeitet, wie auch die in dem Modul 102 erzeugten Qualitätsprognosemodelle.

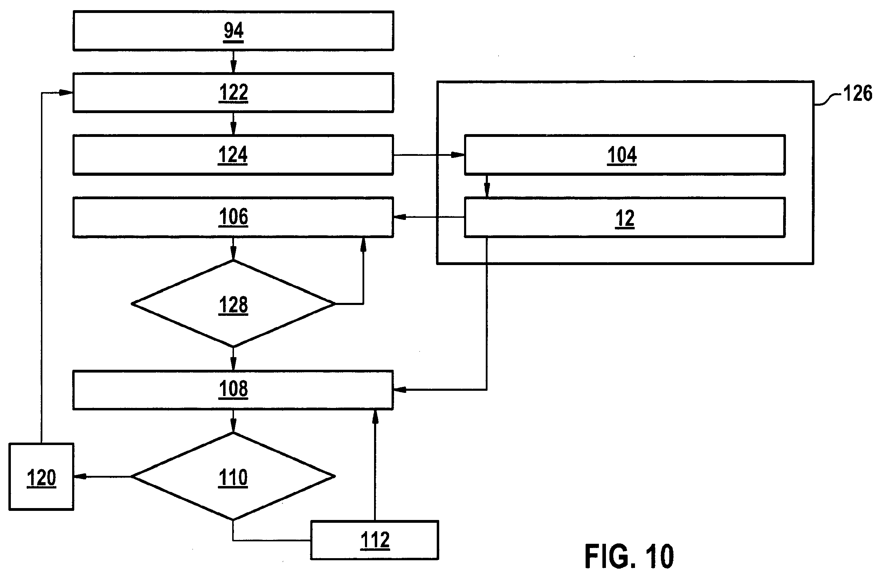

Fig. 10 zeigt ein Blockschema des Moduls automatisierte DoE Durchführung 96. Nach Erstellung des abzuarbeitenden Versuchsplans im Modul Versuchsplan DoE 94 werden zunächst die Prozesseinstellgrößen über einen Versuch N+1 122 und gemittelte Prozesseinstellgrößen 124 für eine erste Prozesseinstellung N+1 104 an die Spritzgießmaschine übergeben und der Spritzgießprozess 126 gestartet. Über die prozessinterne Sensorik 12 wird im Modul Kalibrierung Prozessstabilität 106 die Kalibrierung der Prozessstabilität überwacht. Im Entscheidungskriterium 128 wird ermittelt, ob die Kalibrierung des Moduls 106 abgeschlossen ist. Falls ja, wird die Prozessstabilität im Modul Überwachung Prozessstabilität 108 überwacht. Falls nein, wird die Kalibrierung im Modul 106 fortgesetzt. Im Entscheidungskriterium 110 wird ermittelt, ob der Prozess ausreichend stabil ist. Ist Prozessstabilität gegeben, erfolgt zur Vermessung der gefertigten Spritzgießbauteile eine Teileentnahme 120 für eine vorgegebene Anzahl an Teilen, ansonsten wird über ein Wartezeitmodul 112 eine Wartezeit bis zur zulässigen Entnahme von Bauteilen für die Vermessung vorgegeben, das heißt, die Prozessstabilität wird weiter im Modul 108 überwacht bis im Entscheidungskriterium 110 ermittelt wird, dass der Prozess stabil ist und eine Teileentnahme 108 vorgenommen werden kann. Ist die vorgesehene Anzahl an Bauteilen zu einer ersten Versuchseinstellung gemäß DoE abgeschlossen, wird die nächste Versuchseinstellung abgefahren und die zugehörigen Prozesseinstellgrößen an die Spritzgießmaschine übergeben. Erreicht der Spritzgießprozess wiederum einen stabilen Zustand gemäß Modul 108, erfolgt eine erneute Teileentnahme, nach deren Abschluss wieder eine nächste Versuchseinstellung des Versuchsplans erfolgt. Dieser Vorgang wird solange fortgesetzt, bis sämtliche Versuche des Versuchsplans abgearbeitet sind. Als letzte Kontrolle wird vorzugsweise die erste Versuchseinstellung nochmals gefahren, damit unzulässige Veränderungen während der automatisierten DoE-Durchführung gegebenenfalls noch erkannt und durch eine Versuchswiederholung berichtigt werden können.

## Patentansprüche

1. Verfahren zur Regelung eines Spritzgießprozesses, bei welchem über ein Reglermodul (16) Prozesseinstellgrößen (14) einer Spritzgießmaschine (10) gesteuert werden, wobei das Reglermodul (16) Daten aus einer prozessinternen Sensorik (12) der Spritzgießmaschine (10), Daten über den Fertigungsverlauf der Spritzgießteile aus einer externen Sensorik (18) und/oder Daten über die Qualität eines gefertigten Spritzgießbauteils aus einer Online- Bauteilkontrolle empfängt, diese Daten in einem Qualitätsprognosemodul (36) auswertet und in Abhängigkeit der Auswertung der Daten eine Änderung der Prozesseinstellgrößen (14) der Spritzgießmaschine (10) durchführt, wobei durch die Änderung der Prozesseinstellgrößen (14) der Arbeitspunkt (40) der Spritzgießmaschine (10) derart verändert wird, dass die Qualitätsmerkmale der mit dem geänderten Arbeitspunkt (40) gefertigten Spritzgießbauteile innerhalb der vorgegebenen Toleranzen der Qualität der Spritzgießbauteile liegen, **dadurch gekennzeichnet, dass** die Prozesseinstellgrößen der Spritzgießmaschine in einer hierarchischen Abfolge geändert werden, so dass die von der Reaktionszeit der Spritzgussmaschine eher zeitkritischen Prozesseinstellgrößen wenn möglich nicht oder nur sehr langsam geändert werden.

2. Verfahren nach Anspruch 1 , **dadurch gekennzeichnet, dass** innerhalb des Reglermoduls (16) aus den Daten der externen Sensorik (18) und aus den Daten der prozessinternen Sensorik (12) Prozesskenngrößen ermittelt werden, wobei aus den Prozesskenngrößen und den Daten der Online-Bauteilkontrolle eine Qualitätsprognose für mindestens ein Qualitätsmerkmal eines Spritzgießbauteils durchgeführt wird.

3. Verfahren nach Anspruch 1 oder 2, **dadurch gekennzeichnet, dass** das Reglermodul (16) während des Spritzgießprozesses auftretende Sensorfehler detektiert und online korrigiert.

4. Verfahren nach einem der Ansprüche 1 bis 3, **dadurch gekennzeichnet, dass** über das Qualitätsprognosemodul (36) eine Ausschussweiche (22) angesteuert wird.

5. Verfahren nach einem der Ansprüche 2 bis 4, **dadurch gekennzeichnet, dass** innerhalb des Reglermoduls (16) mittels der aus den Daten der externen Sensorik (18) und aus den Daten der prozessinternen Sensorik (12) ermittelten Prozesskenngrößen die Prozessstabilität ermittelt wird und, falls die Pro- zessstabilität vorgegebene Grenzwerte überschreitet, eine Meldung ausgegeben wird.

6. Verfahren nach einem der Ansprüche 1 bis 5, **dadurch gekennzeichnet, dass** das Reglermodul (16) ein Prozesseinstellungsmodul umfasst, innerhalb welchem ein bestehender Arbeitspunkt (40) des Spritzgießprozesses auf Basis der Qualitätsprognose, einer Prozessdrifterkennung und der Prozessstabilität ermittelt und bewertet wird und gegebenenfalls ein neuer geänderter Arbeitspunkt (40) festgelegt wird.

7. Verfahren nach Anspruch 6, **dadurch gekennzeichnet, dass** eine schrittweise Anpassung des bestehenden Arbeitspunktes (40) an den neuen geänderten Arbeitspunkt (40) erfolgt.

8. Reglermodul (16) mit Mitteln zur Durchführung des Verfahrens nach einem der vorhergehenden Ansprüche umfassend ein Qualitätsprognosemodul (36).

## Claims

1. Method for controlling an injection-moulding process, in which process setting variables (14) of an injection-moulding machine (10) are controlled by way of a controller module (16), wherein the controller module (16) receives data from a process-internal sensory system (12) of the injection-moulding machine (10), data concerning the production flow of the injection-moulded parts from an external sensory system (18) and/or data concerning the quality of a produced injection-moulded component from an online component control unit, evaluates these data in a quality prognosis module (36) and, dependent on the evaluation of the data, carries out a modification of the process setting variables (14) of the injection-moulding machine (10), wherein the operating point (40) of the injection-moulding machine (10) is varied by the modification of the process setting variables (14) such that the quality characteristics of the injection-moulded components produced with the modified operating point (40) are within the predefined tolerances of the quality of the injection-moulded components, **characterized in that** the process setting variables of the injection-moulding machine are modified in a hierarchical sequence, so that, if possible, the process setting variables that are more time-critical on the reaction time of the injection-moulding machine are not modified, or only very slowly.

2. Method according to Claim 1, **characterized in that** characteristic process variables are determined within the controller module (16) from the data of the external sensory system (18) and from the data of the process-internal sensory system (12), wherein a quality prognosis for at least one quality characteristic of an injection-moulded component is carried out from the characteristic process variables and the data of the online component control.

3. Method according to Claim 1 or 2, **characterized in that** the controller module (16) detects and corrects online sensor faults occurring during the injection-moulding process.

4. Method according to one of Claims 1 to 3, **characterized in that** a reject diverter (22) is activated by way of the quality prognosis module (36).

5. Method according to one of Claims 2 to 4, **characterized in that** the process stability is determined within the controller module (16) by means of the characteristic process variables determined from the data of the external sensory system (18) and from the data of the process-internal sensory system (12) and, if the process stability exceeds predefined limit values, a message is issued.

6. Method according to one of Claims 1 to 5, **characterized in that** the controller module (16) comprises a process-setting module, within which an existing operating point (40) of the injection-moulding process is determined and evaluated on the basis of the quality prognosis, a process drift detection and the process stability and, if need be, a new modified operating point (40) is established.

7. Method according to Claim 6, **characterized in that** an incremental adaptation of the existing operating point (40) to the new modified operating point (40) takes place.

8. Controller module (16) with means for carrying out the method according to one of the preceding claims comprising a quality prognosis module (36).

## Revendications

1. Procédé de régulation d'un processus de moulage par injection dans lequel des grandeurs d'ajustement de processus (14) d'une machine de moulage par injection (10) sont commandées par le biais d'un module de régulation (16), le module de régulation (16) recevant des données à partir d'un système de capteur (12), interne au processus, de la machine de moulage par injection (10), des données concernant le déroulement de la fabrication des pièces moulées par injection à partir d'un système de capteur externe (18) et/ou des données concernant la qualité d'un composant moulé par injection fini à partir d'un contrôle en ligne des composants, analysant ces données dans un module de pronostic de qualité (36) et, en fonction de l'analyse des données, effectuant une modification des grandeurs d'ajustement de processus (14) de la machine de moulage par injection (10), le point de travail (40) de la machine de moulage par injection (10) étant modifié par la modification des grandeurs d'ajustement de processus (14) de telle sorte que les caractéristiques de qualité des composants moulés par injection finis, avec le point de travail modifié (40), soient situées à l'intérieur de tolérances prédéfinies de qualité des composants moulés par injection, **caractérisé en ce que** les grandeurs d'ajustement de processus de la machine de moulage par injection sont modifiées dans une séquence hiérarchique de telle sorte que les grandeurs d'ajustement de processus relativement critiques du point de vue du temps de réaction de la machine de moulage par injection soient autant que possible non modifiées ou ne soient modifiées que très lentement.

2. Procédé selon la revendication 1, **caractérisé en ce que** l'intérieur du module de régulation (16), à partir des données du système de capteur externe (18) et à partir des données du système de capteur interne au processus (12), des grandeurs caractéristiques de processus sont déterminées, un pronostic de qualité pour au moins une caractéristique de qualité d'un composant moulé par injection étant effectué à partir des grandeurs caractéristiques de processus et des données du contrôle en ligne des composants.

3. Procédé selon la revendication 1 ou 2, **caractérisé en ce que** le module de régulation (16) détecte et corrige en ligne des erreurs de détection se produisant pendant le processus de moulage par injection.

4. Procédé selon l'une quelconque des revendications 1 à 3, **caractérisé en ce qu'**un aiguillage de mise au rebut (22) est commandé par le biais du module de pronostic de qualité (36).

5. Procédé selon l'une quelconque des revendications 2 à 4, **caractérisé en ce que** la stabilité du processus est déterminée à l'intérieur du module de régulation (16) au moyen des grandeurs caractéristiques de processus déterminées à partir des données du système de capteur externe (18) et à partir des données du système de capteur interne au processus (12), et si la stabilité du processus dépasse des valeurs limite prédéfinies, un avertissement est envoyé.

6. Procédé selon l'une quelconque des revendications 1 à 5, **caractérisé en ce que** le module de régulation (16) comprend un module d'ajustement de processus à l'intérieur duquel un point de travail existant (40) du processus de moulage par injection est déterminé et est analysé sur la base du pronostic de qualité, d'une reconnaissance d'une dérive de processus et de la stabilité du processus, et éventuellement un nouveau point de travail modifié (40) est établi.

7. Procédé selon la revendication 6, **caractérisé en ce qu'**une adaptation progressive du point de travail existant (40) au nouveau point de travail modifié (40) est effectuée.

8. Module de régulation (16) comprenant des moyens pour mettre en oeuvre le procédé selon l'une quelconque des revendications précédentes, comprenant un module de pronostic de qualité (36).
